# EUROPEAN PATENT APPLICATION

(11) **EP 2 210 659 A1**
(43) Date of publication of application: **28.07.2010**
(21) Application number: 09151348.1
(22) Date of filing: 26.01.2009
(51) Int. Cl.: B01J 2/02

(54) **Effective droplet drying**

(71) Applicant: Nederlandse Organisatie voor toegepast -natuurwetenschappelijk onderzoek TNO, 2628 VK Delft (NL)
(72) Inventor: Houben, René Jos, 6031 HW Nederweert (NL); Brouwers, Leonardus Antonius Maria, 5954 NB Beesel (NL); Oosterhuis, Gerrit, 5682 EN Best (NL); Verhoeven, Frits, 5653 AR Eindhoven (NL); Pieterse, Gerben, 5624 KL Eindhoven (NL)
(74) Representative: Hatzmann, Martin

(57) **Abstract**

In one aspect, the invention provides a system and method for spray drying a fluid. The system comprises a fluid reservoir (2), a spraying device (3) that comprises at least one outflow opening (4) for projecting droplets of fluid (5) from the reservoir (2) out of the at least one outflow opening (4) and at least one energy source (6) for at least partially drying the droplets. The spraying device (3) is arranged to project the droplets into a determinable droplet trajectory and the at least one energy source (6) is arranged for providing energy focused substantially on the droplet trajectory.

It is an object of the invention to provide a system and method for reducing the amount of energy required for spray drying.

## Description

The invention relates to the field of spray drying fluids.

Spray drying a fluid means that droplets of the fluid are dried to become particles. The spray drying of fluids is e.g. applied in the food industry for drying a nutrient or an ingredient therefore, like dairy, proteins, carbon hydrates, fats, or combinations thereof. Spray drying may further be applied for drying fluids such as, but not limited to, detergents, pigments, catalysts, pharmaceuticals, cosmetics, polymeric resins, ceramic powders, powder coating materials, adhesives, gypsum, cement, metal powders, etc.

In a conventional type of spray drying, the fluid is fed to a nozzle, which produces a mist of droplets of the fluid in a vessel. The droplets are subsequently dried, e.g. in a stream of air in a drying tower. A disadvantage of this method is that it takes a relatively large amount of energy for drying the droplets to become particles.

It is an object of the present invention to provide a system and method for reducing the amount of energy required for spray drying.

In one aspect, the invention provides a system for spray drying a fluid, the system comprising a fluid reservoir and a spraying device. The spraying device comprises at least one outflow opening for projecting droplets of fluid from the reservoir out of the at least one outflow opening and at least one energy source for at least partially drying the droplets. The spraying device is arranged to project the droplets into a determinable droplet trajectory and the at least one energy source is arranged for providing energy focused substantially on the droplet trajectory.

In another aspect, the invention provides a method for spray drying a fluid. The method comprises the steps of projecting droplets of fluid from a reservoir out of at least one outflow opening and at least partially drying the droplets with energy provided by at least one energy source. The droplets are projected into a determinable droplet trajectory and the energy is focused substantially on the droplet trajectory.

### Figures

FIG. 1 shows a schematic representation of the system for spray drying a fluid according to the invention.
FIG. 2 shows a schematic representation of a second embodiment of a system for spray drying a fluid according to the invention.
FIG. 3 shows a schematic representation of a third embodiment of a system for spray drying a fluid according to the invention.
FIG. 4 shows a schematic representation of a fourth embodiment of a system for spray drying a fluid according to the invention.
FIG. 5 shows an embodiment of a focused energy source according to the invention.
FIG. 6 shows embodiments of the focused energy source according to the invention.
FIG. 7 shows embodiments of the focused energy source according to the invention.
FIG. 8 shows embodiments of the focused energy source according to the invention.
FIG. 9 shows a schematic representation of the method for spray drying a fluid according to the invention.

### Description

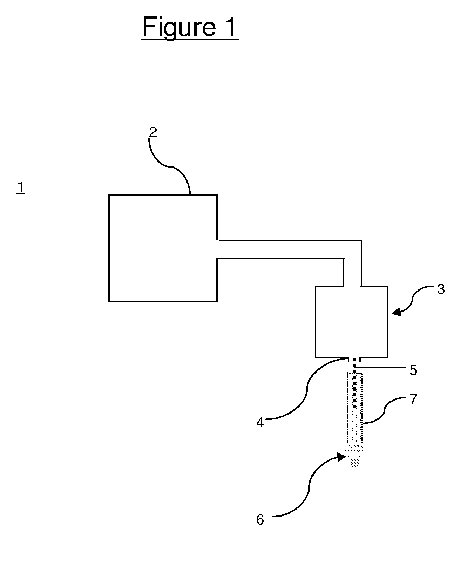

FIG. 1 shows an embodiment of the system for spray drying a fluid according to the invention. The system (1) comprises a reservoir (2) and a spraying device (3). The spraying device is in fluid communication with the reservoir (2) for supplying the fluid to be spray dried to the spraying device. The spraying device comprises at least one outflow opening (4) and is arranged for projecting droplets of fluid (5) from the reservoir (2) out of the at least one outflow opening (4). An outflow opening may comprise a nozzle. The terms outflow opening and nozzle will be used as synonyms in the following. A mechanism for projecting droplets known from the prior art is the so-called Rayleigh break-up mechanism. A projecting apparatus based on this mechanism, typically comprises a vibrating nozzle or vibrating nozzle plate. The system further comprises at least one energy source (6) for at least partially drying the droplets. The system is **characterized in that** the spraying device is arranged to project the droplets into a determinable droplet trajectory and the at least one energy source (6) is arranged for providing energy (7) focused substantially on the droplet trajectory.

In the embodiment shown in FIG. 1, the spraying device (3) comprises one outflow opening (4). It will be appreciated that it is also possible that the spraying device (3) comprises a plurality of outflow openings (4) for projecting the fluid out of the plurality of outflow openings (4) for obtaining droplets of the fluid. Thereto, the outflow openings (4) may e.g. be arranged as bores in a surface of the spraying device (3).

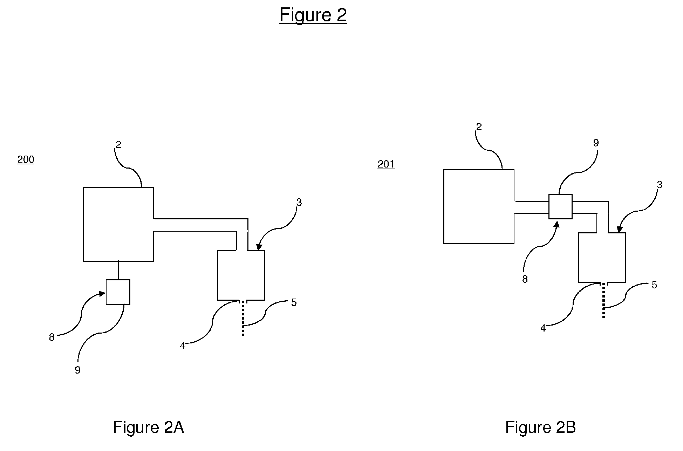

To provide a determinable droplet trajectory, the embodiment of the spraying device (200) illustrated in Fig. 2A comprises feed pressure generating means (8) for providing the fluid to the outflow opening (4) at a predetermined feed pressure for obtaining a fluid jet. Other mechanisms for providing a determinable droplet trajectory may also be used. Here, the feed pressure generating means (8) are arranged for keeping the feed pressure substantially constant. Hence, a fluid jet is generated, while the feed pressure generating means (8) substantially do not disturb the jet. Adding feed pressure generating means (8) is only one way to provide a determinable droplet trajectory. Other ways are possible. In this embodiment, the feed pressure generating means comprise a pump (9) for supplying the fluid at the desired pressure.

In another embodiment of the spraying device according to the present invention (201), shown in FIG. 2B, the pump (9) is positioned between the reservoir (2) and the spraying device (3) such that the fluid from the reservoir (2) is supplied to the spraying device (3) under pressure. In this embodiment, the pump (9) is arranged for keeping the feed pressure substantially constant. Thereto, the pump (9) may comprise a pressure regulator, such as an overpressure valve and/or a pressure regulating valve and/or a damper. Alternatively, or additionally, the feed pressure generating means (8) may be arranged for applying pressure to the fluid hydraulically or pneumatically for keeping the feed pressure substantially constant, i.e. the feed pressure generating means (8) may use pressurized liquid or gas, respectively, to exert a substantially constant pressure on the fluid. In this embodiment the pump may be arranged to vary the flow rate so as to keep the pressure constant.
In another embodiment, the pump may be arranged so as to keep the flow rate constant, which results in a certain pressure. A example of such a pump is a constant flow pump.

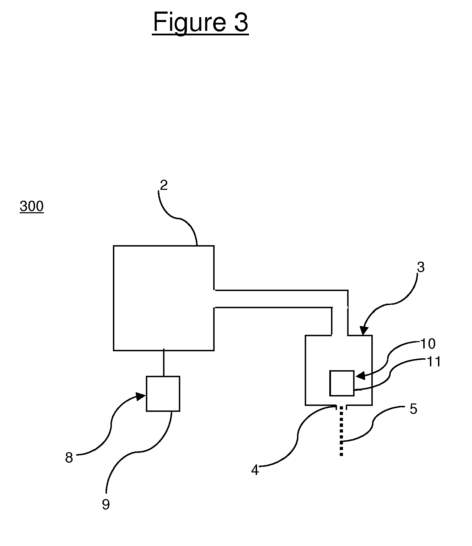

Another embodiment of the system for spray drying a fluid (300) is shown in FIG. 3. This embodiment is essentially the same as the previous embodiment. However, the spraying device (3) is further arranged for providing monodisperse droplets. Therefore this embodiment further comprises pressure varying means (10) for varying the pressure of the fluid upstream of the outflow opening (4). When the jet is projected from the outflow opening (4), variations in the pressure of the fluid of the jet cause the jet to contract at points of minimum pressure. Subsequently, the fluid jet will break up at the contractions, thus forming droplets of fluid (5). The amplitude of the variations in the pressure of the fluid may be approximately 10% of the feed pressure. The amplitude of the variations in the pressure may be 1 mbar to 100 bar, preferably smaller than or equal to 25 bar.

In the embodiment illustrated in FIG. 3, the pressure varying means (10) comprise a control element (11), which is movable in a direction from/to the outflow opening (4). Vibrating the control element (11) relative to the outflow opening (4) causes the pressure of the fluid to vary between the control element (11) and the outflow opening (4). When the fluid is projected from the outflow opening (4) in the fluid jet, the variations in pressure in the fluid extend into the fluid jet. The pressure varying means (10) may e.g. comprise a piezo-electric element, an electrostrictive element, an acoustic element, an electromagnetic actuator, a voice-coil, and/or mechanical means for moving the control element (11) in the direction to/from the outflow opening (4).

If the spraying device (3) comprises a plurality of outflow openings (4), a single control element (11) may be used for varying the pressure of substantially all fluid jets generated by the plurality of outflow openings (4). Therefore, the control element (11) may comprise a plurality of focusing members, preferably one focusing member for each opening. The size and shape of the control element (11) comprising focussing members may be such that the distance between a focusing member and a related outflow opening (4) is preferably between 2 and 1500 micrometers and more preferably between 15 and 500 micrometers. In this configuration, the focusing members only slightly disturb the fluid supply.

In another embodiment similar to the embodiment shown in FIG. 3, the control element is arranged for varying the pressure of the fluid upstream of the outflow opening (4) at a predetermined frequency. Preferably, the predetermined frequency is substantially constant. Hence, the fluid jet will contract, and subsequently break up, at substantially equidistant positions along the fluid jet. Thus, substantially equally sized droplets will be formed. Droplets may be provided with a relatively narrow droplet size distribution, e.g. a droplet size distribution with a monodispersity index of less than 1, preferably smaller than 0.7, more preferably smaller than 0.1. The monodispersity index of the droplet size distribution is defined as (d90-d10/d50), wherein d10, d50 and d90 represent the 10%, 50% and 90% droplet size percentiles, respectively.
When the fluid is substantially homogeneous, substantially equal sized droplets will have substantially equal mass.
This is only one possible way of providing monodisperse droplets, other ways may be possible.

In case of a plurality of outflow openings (4), the outflow openings (4) may have substantially identical dimensions, to allow droplets of substantially identical dimensions to be ejected from each separate outflow opening (4), hence allowing the droplets to be produced with the relatively narrow size distribution.

An advantage of providing monodisperse droplets may be that the amount of drying energy can be related to the size of the droplets and the desired degree of drying. Because the droplets have substantially the same size, the drying result of the droplets will be substantially the same. This may reduce the amount of energy required for drying the droplets because it is no longer necessary to choose the amount of energy such that even the largest droplets will reach the preferred degree of drying. Also, because the droplets substantially have the same size, particles may be prevented that are smaller than the desired droplet size. Smaller droplets could become too dry and even burn. Although the burning of droplets could be useful in some situations, it is typically unwanted.

Preferably, the amount of energy will be such that the droplets will completely and efficiently dry without forming a hard crust around the surface of the droplet. Such a crust may prevent water in the inside of the droplet to diffuse to the surface and may therefore disturb the drying process. There may however also be situations in which it is desired to only partially dry the droplets. In yet other circumstances, it may be preferred to provide an amount of energy such that pyrolysis of droplets comprising an organometallic compound occurs. This may e.g. be useful in the field of droplet printing electrical components like insulators and semiconductors on substrates.

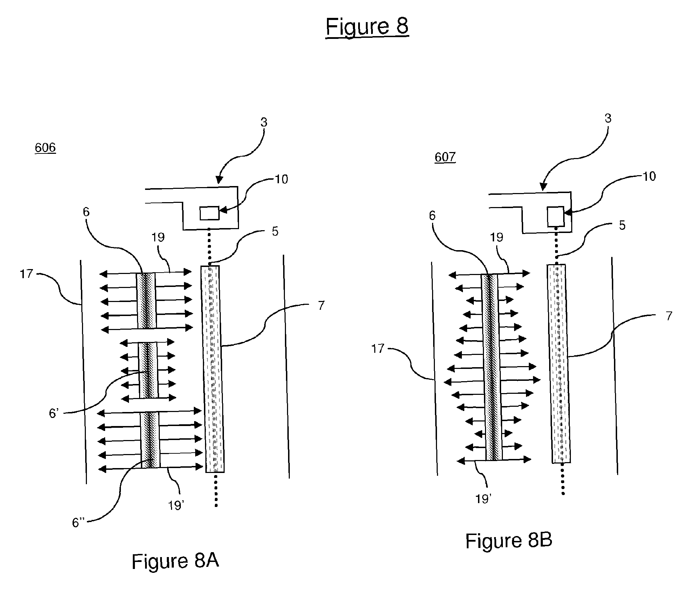

The present invention wherein monodisperse droplets are dried over a predeterminable trajectory further enables to optimize the drying process by selectively providing energy along the trajectory. This means that the amount of energy supplied to the droplet may vary depending on the position of the droplet in the trajectory and therefore depending on the drying degree of the droplet. Examples of energy sources arranged for selectively providing energy along the droplet trajectory are shown in FIG. 8 and are described later.

Coagulation of droplets may be harmful for a narrow droplet distribution. Several precautions may be taken to prevent coagulation.
First, the predetermined pressure varying frequency of the pressure varying means (10) may be chosen such that a distance between two droplets consecutively ejected at the outflow opening (4) is greater than or equal to two times the droplet diameter, preferably greater than or equal to three times the droplet diameter.
Second, in case of a plurality of outflow openings (4), the nozzles (4) may be arranged for generating a plurality of mutually divergent jets of the fluid. When the jets are mutually divergent, the risk of coagulation of droplets ejected by mutually different nozzles (4) is reduced, since the distance between the droplets ejected by the mutually different nozzles (4) increases during flight.
Third, the distance between two adjacent nozzles (4) of the plurality of nozzles (4) may be larger than 1.5 times a transverse dimension, such as a diameter, of at least one of two adjacent nozzles (4), more preferably larger than 2 times, most preferably larger than or equal to 2.5 times the transverse dimension. This also reduces the risk of coagulation of droplets.

The system for spray drying a fluid according to the present invention may be used with a variety of droplet generating systems. The droplets may e.g. be generated continuously or non-continuously, e.g. on a drop-on-demand basis. Further, droplets of low viscosity fluids may be generated, e.g. droplets of saline solutions with a viscosity of 2 mPa·s and also high viscosity droplets may be generated, e.g. with a viscosity of 250 mPa·s.

Spray drying high viscosity fluids is desired for example in the food processing industry, e.g. for drying milk. In conventional milk drying, the milk may be atomized and dried in a drying tower. Milk comprises a substantial amount of water and removing such an amount of water in a drying tower may not be very energy efficient. Using high viscosity printing systems enables to first extract water from the milk in an energy efficient way and subsequently dry the extracted high viscosity of milk droplets. An exemplary viscosity of extracted high viscosity milk droplets is 250 mPa·s. Drying extracted milk droplets may be much more energy efficient than the conventional milk drying process.
Projecting the droplets into a determinable droplet trajectory and arrange an energy source for providing energy focused substantially on the droplet trajectory, as in the present invention, may even further increases the energy efficiency of the drying process.

To print high viscosity fluids, in another embodiment the spraying device (3) is further arranged to cause a pressure drop in the fluid across the outflow opening (4) which is larger than 15 bar, so as to enable projecting droplets of fluid with a viscosity of at least 100 mPa·s. Projecting droplets of high viscosity fluids enables to spray dray fluids with a larger concentration of dry matter. This means that less fluid has to be removed while drying the droplets. This may increase the energy efficiency.

For printing high viscosity fluids, the pressure drop in the fluid across the outflow opening 4 is preferably between 50 bar and 400 bar and more preferably between 100 and 200 bar.

The viscosity of the fluid is higher than 10 mPa·s, preferably higher than 25 mPa·s, more preferably higher than 50 mPa·s even more preferably higher than 100 mPa·s, and most preferably higher than 200 mPa·s, determined at the temperature which in use prevails in the outflow opening (4). The temperature of the material to be printed is preferably between -50 and 300 °C and more preferably between 40 and 100 °C. The shear rate as in use present in the outflow opening (4) is preferably between l·10⁴ and l·10⁶ s⁻¹ and more preferably 5·10⁵ s⁻¹, using a capillary viscosity meter.

The smallest transverse dimension, such as a diameter, of the outflow opening (4) may be smaller than or equal to 150 micrometer, preferably smaller than or equal to 100 micrometer, more preferably smaller than or equal to 80 micrometer and most preferably smaller than or equal to 60 micrometer.

The combination of the pressure drop, high viscosity and dimension of the nozzle (4) provide that droplets of the high-viscosity fluid can be produced having a desired size of preferably smaller than or equal to 250 micrometer in average and more preferably smaller than or equal to 100 micrometer in average.

Spray drying a high viscosity fluid desires the feed pressure in the interval of 15 - 3000 bar and preferably in the interval of 15 - 600 bar.

Spray drying a high viscosity fluid desires the control element (11) being positioned at a predetermined distance between 2 and 1500 micrometer and preferably between 15 and 500 micrometer to the outflow opening (4). This provides the advantage that a pressure variation exerted to the high-viscosity fluid is prevented from being damped by the high- viscosity fluid to an extent that the jet projected from the outflow opening (4) does not experience a pressure variation with large enough amplitude to effectively break up into droplets.
As described above, when the drying system comprises a plurality of outflow openings, the control element (11) may comprise a plurality of focusing members, preferably one focusing member for each opening. The distance between a focusing element and a related opening is then preferably between 2 and 1500 micrometers and more preferably between 15 and 500 micrometers.

In an inkjet printing system, the transverse dimension of the droplets, e.g. the diameter depends on the flow rate and the pressure varying frequency. E.g. an outflow opening with a flow rate of 2.4 ml/min and a pressure varying frequency of 40.000 Hz obtains an average droplet diameter (d50) of 124 micrometer. The same flow rate of 2.4 ml/min and a much lower frequency of 500 Hz results in a droplet diameter of 535 micrometer. It is noted that droplet diameter refers to the diameter of the droplet directly after leaving the outflow opening. The dimensions of the dried powder particle may be smaller.
In principle, the droplet diameter does not depend on the diameter of the outflow opening. However, the diameter of the outflow opening may influence the possible flow rates. It might e.g. not be possible to stably push as little as 0.2 ml/min through the same 80 micrometer nozzle.
For a flow rate of 2.4 ml/min, the diameter of the nozzle is preferably 80 micrometer, and a flow rate of 0.6 ml/min is preferable combined with a 30 micrometer nozzle. The latter flow rate of 0.6 ml/min combined with a pressure varying frequency of 40.000 Hz results in droplets with a diameter of 78 micrometer and combined with a frequency of 500 Hz in droplets with a diameter of 337 micrometer.

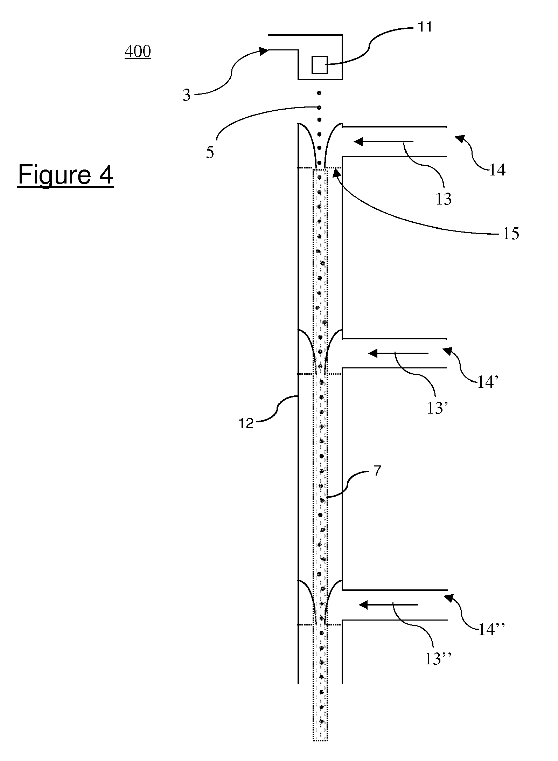

To further enhance the determinability of the droplet trajectory, the system for spray drying a fluid may be arranged for manipulating a droplet guiding gas stream to aerodynamically focus droplets into the predeterminable droplet trajectory. The gas stream may e.g. be a stream of air. If it is desired to prevent oxidation of the droplets of fluid, nitrogen, argon or any other suitable oxidation preventing gas may be used. In some situations, a slight oxidation of the droplets may be helpful. I these cases e.g. a mixture of oxygen and argon could be used.
An example of such a gas guided drying system (400) is shown in FIG. 4. The drying system (400) comprises a spray head (3) comprising a control element (11). The droplets of fluid (5) are projected in a tube (12) in which a gas stream (13) is provided through a gas supply opening (14). The gas stream (13) is preferably laminar and preferably has the same velocity as the droplets of fluid (5). The droplets follow the stream of gas, but little differences in the size and shape of the droplets may cause them to deviate from their trajectory. Aerodynamically correcting the droplets may focus the droplets substantially in the middle of the tube (12) and within the drying energy (7). Aerodynamically correcting the droplets may also prevent droplets from being stuck in the spray drying system and thus polluting the system.
Optionally a diffuser (15) is provided for effecting a gradual influx of the gas. Another option is to provide a plurality of gas streams (13' and 13") through a plurality of gas supply openings (14' and 14") for further stabilizing the system.

To further enhance the determinability of the droplet trajectory, the aerodynamic focussing may comprise accelerating the droplets to prevent coagulation. The aerodynamic focussing may accelerate the droplets. This may reduce the probability of droplet coagulation.

One aspect of the invention is an energy source providing energy focused substantially on the droplet trajectory. An example of such a focused energy source is a laser. Alternatively, at least one energy source (6) is positioned with respect to a reflective energy focusing element (20) so as focus the energy from the at least one energy source (6) in at least one focal point.

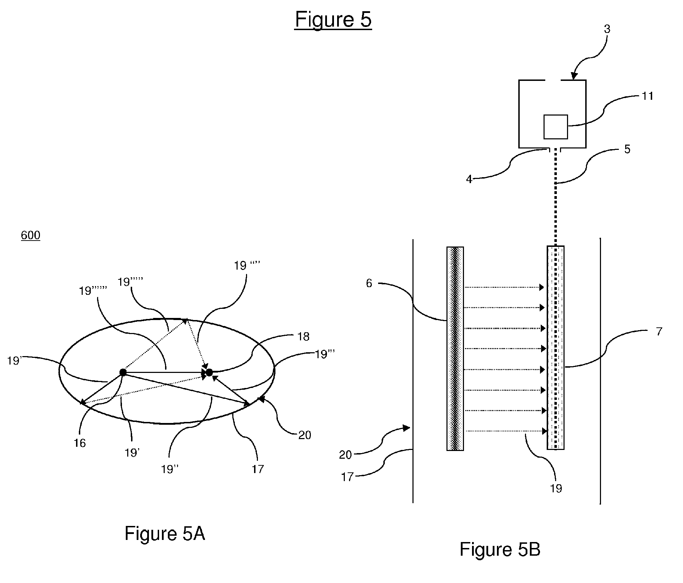

FIG. 5 illustrates an embodiment of an energy source (6) according to the present invention, wherein the reflective energy focusing element (20) comprises at least part of an elliptical mirror (17) and wherein the at least one energy source (6) is positioned in a first focal point (16) of the at least part of an elliptical mirror (17) so as to focus at least part of the radiated energy in a second focal point (18).
In this embodiment, the energy source (6) is positioned in a first focal point (16) of at least part of an elliptical mirror (17) so as to focus at least part of the radiated energy in a second focal point (18). Focusing the energy may increase the drying efficiency and/or drying speed as described above. In this embodiment, the energy source (6) in the first focal point (16) may e.g. comprise a heater with a glow spiral. However, other energy sources like infrared light sources are also possible. Fig. 5A shows a top view of this embodiment of the energy source (600), wherein radiation beams (19, 19', 19", 19"', 19"", 19""' and 19""") are shown. (For clarity, in the following figures, not all the radiation beams (19) are shown.) Radiation beam 19 travels directly from the energy source (6) in the first focal point (16) to the second focal point (18). The other beams travel indirectly, i.e. being reflected by the mirror (17), from the first to the second focal point. FIG. 5B clearly shows a side view of this embodiment, wherein the radiation beams (19) travel from the energy source (6) in the first focal point (11) to focus energy (7) in the second focal point (18).

In conventional spray drying techniques, heated air is applied, e.g. convective or direct to the droplets. Air heating reduces air relative humidity, which is the driving force for drying. Besides, higher temperatures speed up diffusion of water inside the solids, so drying is faster. However, quality considerations limit the applicable rise to air temperature. Too hot air may lead e.g. to crust formation or 'case hardening'.

When applying radiation driven drying, e.g. dielectric drying, droplets are heated and dried by means of radiofrequency or microwaves being absorbed inside the material. Radiation driven drying may be more efficient and/or faster than air drying techniques. First, the wavelength of the radiation source, e.g. an infrared source may be matched to the absorption characteristics of the material. Other radiation sources are possible, e.g. light sources in another than the infrared spectrum. Second, it may be possible to apply more power to the droplets via radiation than via heat drying without burning the droplets, forming a crust or causing the occurrence of case hardening effects'. Preliminary experiments have shown that droplets may be spray dried eventually over a trajectory between 50 centimeter and one meter. This is very advantageous compared to the big drying towers in use for applying conventional spray drying methods.

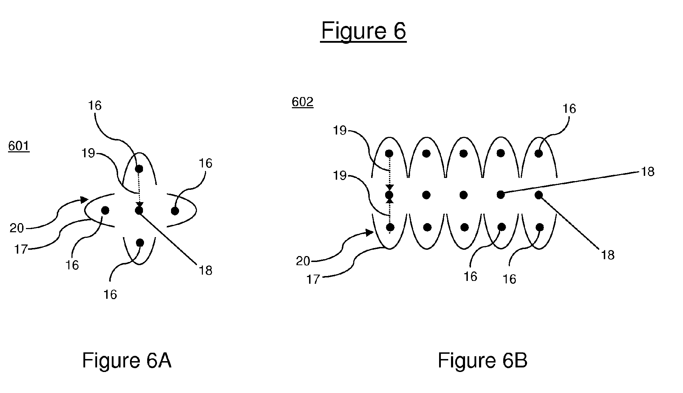

FIG. 6 shows several alternatives for configuring the focused energy source. FIG. 6A shows an energy source (601) comprising four parts of elliptic mirrors (17) positioned orthogonally towards each other, such that the four second focal points (18) of the mirrors (17) overlap. This way, the energy of four energy sources (6) is collected in one shared focusing point. In FIG. 6B, an energy source (602) is shown, comprising five adjacent mirror structures, wherein each mirror structure comprises two elliptic mirrors (17) being positioned opposite each other, with overlapping second focal points (18) wherein the energy of two energy sources (6) is focused. This configuration is adapted to a spray system comprising five outflow openings (4) being positioned on a line.

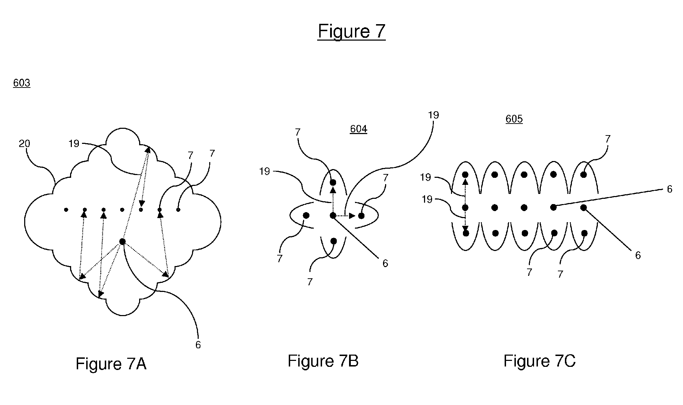

Up to now, energy sources have been described in which the energy of one or more energy sources is focused into one beam of energy. FIG. 7 shows embodiments of focused energy sources wherein the reflective energy focusing element (20) is arranged to focus the radiated energy of the at least one energy source (6) in a plurality of focal points.
This is advantageous because preliminary experimental results show that the energy needed to dry a typical droplet train may be between 0.1 and 10 Watt. The power of an infrared (IR) energy source 6 is typically at least 1000 Watt, which may be too high and burn the droplets instead of drying them with the risk to cause an explosion.

In FIG. 7A, an energy source (603) is shown comprising an energy source (6) being positioned within a reflective energy focusing element (21) that focuses the energy of the energy source (6) on seven beams of energy (7).
The energy source (604) shown in FIG. 7B is similar to the configuration of FIG. 6A, wherein the radiation of one energy source (6) is distributed over four beams of energy (7). The energy source (605) shown in FIG. 7C is similar to the configuration of FIG. 6B, wherein the radiation of five energy sources (6) is distributed over ten beams of energy (7).

An alternative way to distribute the energy of a single energy source over a plurality of droplet trains is to position a plurality of outflow openings above a single beam of energy. This may e.g. be done in the configuration shown in FIG. 5A.

In the above it was discussed that the drying process may be optimized by selectively supplying energy along the droplet trajectory. FIG. 8A shows an energy source (606) comprising a plurality of energy sources (6, 6' and 6") to provide the desired energy profile (7). Each energy source (6) delivers the desired amount of energy (7). FIG. 8B shows an energy source (607) with one energy source (6) that delivers the desired energy profile (7). The one energy source (6) may e.g. comprise a glow spiral designed in such a way that it delivers the desired energy profile (7).

Other energy sources combining elements of the energy sources as described above may be used without departing from the broader spirit and scope of the invention as set forth in the appended claims.

An alternative way to provide focused energy to the droplets may be to project the droplets into streams of drying air. The drying air may be flowing along with the droplets or in a counter flow flowing opposite to the direction of the droplets.

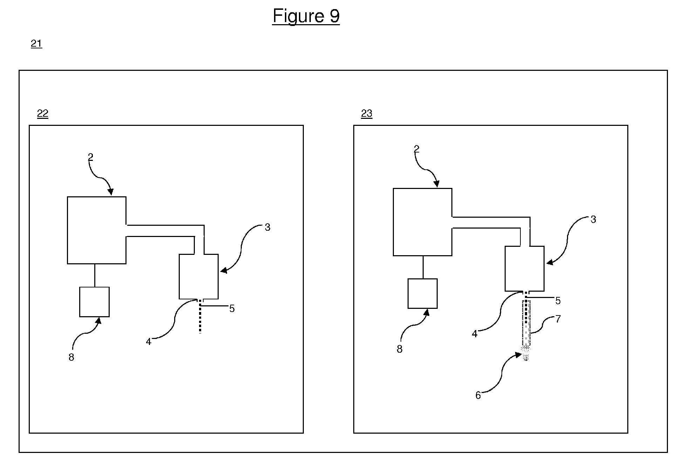

Fig. 9 illustrates a method (21) for spray drying a fluid according to the present invention. The method comprising a first step (22) of projecting droplets of fluid (5) from a reservoir out of at least one outflow opening; and a second step (23) of at least partially drying the droplets with energy provided by at least one energy source (6). The droplets are projected into a determinable droplet trajectory and the energy is focused substantially on the droplet trajectory.
In another embodiment of the method according to the present invention, the method further comprises the step of manipulating a droplet guiding gas stream to aerodynamically focus droplets into the predeterminable droplet trajectory.

It is noted that although in the above the invention is mainly positioned in the field of spray drying liquids for providing powders, the invention may also be applied in other fields, e.g. the field of droplet printing electrical components like insulators and semiconductors. In this particular field, metal salts are dissolved, preferably in water but also in organic solvents and printed subsequently.
Providing energy along the droplet trajectory causes pyrolysis and melting of an organometallic compound and allows a metal layer to be printed on the surface of a substrate. To print ceramic elements, ceramic suspensions are printed, dried and sintered.

The detailed drawings, specific examples and particular formulations given serve the purpose of illustration only. The embodiments described show vertical, line shaped trajectories. It is however also possible to use other, e.g. horizontal or curved trajectory forms. Furthermore, other substitutions, modifications, changes, and omissions may be made in the design, operating conditions, and arrangement of the exemplary embodiments without departing from the scope of the invention as expressed in the appended claims.

In the claims, any reference signs placed between parentheses shall not be construed as limiting the claim. The word 'comprising' does not exclude the presence of other features or steps then those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to advantage.

## Claims

1. System for spray drying a fluid, the system comprising:
- a fluid reservoir (2);
- a spraying device (3), the spraying device (3) comprising at least one outflow opening (4), for projecting droplets of fluid (5) from the reservoir (2) out of the at least one outflow opening (4); and
- at least one energy source (6) for at least partially drying the droplets,
wherein
- the spraying device (3) is arranged to project the droplets into a determinable droplet trajectory and the at least one energy source (6) is arranged for providing energy focused substantially on the droplet trajectory.

2. The system according to claim 1, wherein the spraying device (3) is further arranged for providing monodisperse droplets.

3. The system according to claim 1, wherein the energy source (6) is further arranged for selectively providing energy along the droplet trajectory.

4. The system according to claim 1, wherein the spraying device (3) is further arranged for projecting consecutive droplets with a distance in between of at least two times an average droplet diameter, so as to prevent coagulation of droplets.

5. The system according to claim 1, wherein the system for spray drying a fluid is further arranged for manipulating a droplet guiding gas stream to aerodynamically focus droplets into the predeterminable droplet trajectory.

6. The system according to claim 5, wherein aerodynamic focussing further comprises accelerating the droplets to prevent coagulation.

7. The system according to claim 1, wherein the at least one energy source (6) is positioned with respect to a reflective energy focusing element (20) so as focus the energy from the at least one energy source (6) in at least one focal point.

8. The system according to claim 7, wherein the reflective energy focusing element comprises at least part of an elliptical mirror and wherein the at least one energy source (6) is positioned in a first focal point (16) of the at least part of an elliptical mirror (17) so as to focus at least part of the radiated energy in a second focal point (18).

9. The system according to claim 7, wherein the reflective energy focusing element (20) is arranged to focus the radiated energy of the at least one energy source (6) in a plurality of focal points.

10. The system according any one of the previous claims, wherein the energy source (6) is a radiation source.

11. Method for spray drying a fluid, the method comprising the steps of:
- projecting droplets of fluid (5) from a reservoir (2) out of at least one outflow opening (4); and
- at least partially drying the droplets with energy provided by at least one energy source (6),
wherein
- the droplets are projected into a determinable droplet trajectory and the energy is focused substantially on the droplet trajectory.

12. The method according to claim 11, wherein the method further comprises the step of manipulating a droplet guiding gas stream to aerodynamically focus droplets into the predeterminable droplet trajectory.
